# EUROPEAN PATENT APPLICATION

(11) **EP 2 975 535 A1**
(43) Date of publication of application: **20.01.2016**
(21) Application number: 14176955.4
(22) Date of filing: 14.07.2014
(51) Int. Cl.: G06F 17/30

(54) **Checking freshness of data for a data integration system, DIS**

(71) Applicant: FUJITSU LIMITED, Kawasaki-shi, Kanagawa 211-8588 (JP)
(72) Inventor: Lee, Vivian, Bracknell, Berkshire RG42 2QP (GB)
(74) Representative: Wilding, Frances Ward

(57) **Abstract**

Invention embodiments provide a method of checking freshness of data for a data integration system, DIS, storing data integrated from external sources in a data store wherein a freshness check is carried out on queried data integrated from external sources, the freshness check accessing stored metadata in the DIS and comparing the stored metadata for the queried data with current metadata of the external sources for the queried data; and wherein if the stored metadata matches the current metadata, the DIS allows the query to use the data in the data store and if the stored metadata does not match the current metadata, the data in the data store is refreshed from the external source before use in the query.

## Description

The present invention relates to handling "Big Data" which refers to a collection of data sets so large and complex that it becomes difficult to process using on-hand database management tools or traditional data processing applications.

In the current Big Data era, quintillions of bytes of data are produced every day. The speed of processing large volumes of data is not the only challenge: if one wants to maximize the benefit of utilizing Big Data to improve business performance, integrating data from heterogeneous sources so that data analytics can get real-time insight is also crucial as part of the Big Data process. Data Integration Systems (DIS) are the most suitable candidate to handle this issue, since they are designed for extracting data from heterogeneous sources and for integrating them under a single query interface, thus making the data analytics more efficient.

Hence, integration or aggregation (these terms are used synonymously herein) plays a vital role in data analysis, especially Big Data analytics, since it helps analytics tools to gather data from heterogeneous sources in a variety of formats, and to consolidate data into one unified query-able view. The integration/aggregation process normally includes the following sub-steps: extracting data from external data sources, integrating the data into one single view, and possibly converting the integrated data into a unified data type, most commonly the RDF data type, due to its flexible data structure, and finally, writing the unified data into a DIS system (or storage associated with the DIS). The RDF data type is discussed in more detail hereinafter.

However, due to the speed of change and variety inherent in Big Data, most of the traditional DIS systems are increasingly challenged with the data freshness issue, since real-time (or at least current) knowledge is the key to business success. "Data freshness" is an expression related to whether data stored in DIS storage is up-to-date with the source of the data (and thus identical to the data at the source or "fresh"). Questions like how to know when to update which data source are hard to answer, since the size of each data source and number of different data sources can all be quite large. These issues can all cause stress to DIS systems if not handled properly. There are three well-known techniques when dealing with the data freshness problem, virtual techniques, materialization techniques, and caching techniques.
- Virtual techniques do not store any data, all queries are calculated when they are posed. The system queries the relevant sources and merges the answers in a global answer to deliver to the user.
- Materialization techniques store large volumes of data that are copies of remote data sources; these local copies are refreshed periodically. The queries are executed based on these local copies.
- Caching techniques cache some information, typically data that is frequently accessed or results of some frequent queries. The cached data becomes invalid when the time-to-live (TTL) expires.

These techniques have been around for years, however, in the current Big Data era, they proved to be inefficient. The first two techniques are impractical: virtual techniques may have performance issue when querying large volumes of data, and the materialization techniques may not guarantee the freshness of the data. The caching techniques are the best solution among the three, but in most cases the data inside the caching system is just a partial copy of the external data, and more importantly, within the TTL (time-to-live) time span, data is not guaranteed to be fresh as well.

It is desirable to provide methods for use with DIS systems which allow the data freshness issue to be mitigated, whilst not overstressing the DIS system itself.

According to an embodiment of a first aspect of the invention, there is provided a method of checking freshness of data for a data integration system, DIS, storing data integrated from external sources in a data store wherein: a freshness check is carried out on queried data integrated from external sources, the freshness check accessing stored metadata in the DIS and comparing the stored metadata for the queried data with current metadata of the external sources for the queried data; and wherein if the stored metadata matches the current metadata, the DIS allows the query to use the data in the data store and if the stored metadata does not match the current metadata, the data in the data store is refreshed from the external source before use in the query.

According to this aspect, the freshness check is carried out specifically on queried data. The freshness check accesses stored metadata in the DIS (for example size, date modified, last opened, update log etc) and compares this stored metadata which belongs to the queried data with corresponding current metadata of the external source. This check allows any differences between the current metadata of the source and stored metadata in the DIS to indicate that the data in the data store is no longer fresh. Hence, (and for each external source separately) if the stored metadata matches the current metadata, the query can use the data in the data store because the metadata indicates that it is not out of date. Conversely, if the stored metadata does not match the current metadata, this indicates that the data in the data store is out of date. Thus it is refreshed from the external source before use in the query. For example, the data can be integrated again from the external data source to replace the data previously in the data store.

The prior art data freshness technologies for DIS systems either query the relevant sources and merge the answers in a global answer (virtual techniques) with no long-term storage associated with the DIS, or query data that is either being periodically updated or cached (materialization techniques and caching techniques). There are drawbacks in all these approaches - sending a query down to sources for execution and merging results afterwards will be slow compared to execution to the data that is already stored in DIS system, meanwhile, data that is cached or periodically updated is not guaranteed to be fresh at the time of query execution.

The solution of invention embodiments provides a new method to determine whether an external data source needs to be refreshed at run-time. This is achieved by detecting changes of external data sources relevant to a query, and refreshing the changed data.

According to invention embodiments, the freshness check compares stored metadata of the queried data in the DIS with current metadata of the external source. Any method may be used for obtaining the current metadata in the external source. Preferably, the freshness check regenerates the metadata from the external data sources to provide current metadata and compares the regenerated metadata with the stored metadata to determine whether the queried data needs to be refreshed. Hence the metadata in the DIS is regenerated and the current metadata from the external source can be written over the previous metadata if there are differences between the two.

As mentioned above, when there is a mismatch between the stored metadata and the current metadata, the stored data (in the data store) is refreshed from the external source before use in the query. In preferred embodiments, only data relevant to the query is refreshed from the external source. This leads to an efficient process.

In the vast majority of cases, more than one external source in combination provide the data which is being queried and thus the query triggers a freshness check of queried data for any of two or more external sources, and the check is carried out separately for each external source.

The processes for integrating data for storage before the query is sent to the DIS and for refreshing data in the data store as a consequence of a metadata mismatch can be the same or different. For reasons of an efficient process, the data storage in initial data storage can include extracting data from external sources, and in parallel providing metadata, which is then stored in a registry in the DIS; integrating the data into a single view using a user-defined mapping; and potentially converting the data from a temporary data format into a resource description framework, RDF format using an ontology mapping and storing the data, for example in an RDF store.

The user defined mapping, sometimes referred to as mash-up mapping, is an indication of what information is to be used from each external data source and how the heterogeneous information from the different external sources is to be mixed together into the DIS system (or storage associated therewith). The RDF format is a standard method for modelling information on a semantic network representing semantic relationships between concepts.

Generating the metadata can be carried out by the first step of the data integration process including extracting the data and providing metadata. Hence when metadata is regenerated for the freshness check and data in the DIS then needs to be refreshed, the rest of the data integration process described above takes place without the need to provide metadata (or to extract the data) because these steps have already been carried out.

The previous aspect referred to checking freshness of data for a data integration system, DIS. The DIS may have an internal data store which is effectively part of the DIS, but this is an unusual scenario. Usually, the functionality is distributed and the DIS and the underlying data storage can be two completely separated entities. In both cases, the data can be referred to as being stored in the DIS.

In an embodiment of the second aspect of the invention there is provided a method in a data store linked to a data integration system, DIS, which is configured to integrate data from external sources and store the integrated data in the data store, the method comprising: accepting a user input in the form of a query about data in the data store; sending a freshness check command to the DIS to compare stored metadata for the queried data in the DIS with current metadata for the queried data in the external sources; and waiting for a response from the DIS before passing the query for execution.

This aspect relates to the method in the data store and thus if the data store is (unusually) part of the DIS, it may be a part of the overall method in the DIS. In distributed embodiments in which the data store is provided separately from the DIS, it can be the data store which accepts a query via an input (for example from an application) and sends a freshness check command to the DIS to carry out the method in the DIS as set out hereinbefore. The data store waits for a response from the DIS and then passes the query for execution, at the data storage.

The data store need not be aware of the steps carried out in the DIS but can simply wait for a response releasing the query for execution.

In invention embodiments, the freshness check command may always be sent from the data store or it may only be sent under certain conditions and otherwise omitted. Preferably, the freshness check command is not sent if the breadth of the query and/or size of the external data source queried and/or location of the external data source queried would lead to an unacceptably large data transfer, and preferably if the freshness check command is not sent due to the threshold, a user is recommended to bound the query further.

An example of a relevant situation is when a full query (that asks for all the information in the DIS store) is sent. In such a case or similar cases, there may be a first check of the location of the external data. That is, if the data is locally stored or within the same limited network, the freshness check may still potentially take place. However, the size of an external data source or the location of an external data source may nevertheless mean the data retrieval will take too long or not be practical.

In an advantageous development, a user, (whether via an application or not) may be recommended to bound the query further if the freshness check is not carried out.

In other circumstances, it may not be necessary to carry out the freshness check. Advantageously, the freshness check command is only sent if a query directed to the same queried data has not been made within a certain time span. This can avoid unnecessary freshness checks. In a development of this idea, if there is a frequent repeat of the same query, there may be a further cross check to make sure that there is a freshness check nevertheless takes place when appropriate. For example, there could be another time span defined after which a freshness check command is always sent despite repeat queries, or for monitoring whether the same query has been resent so often that a freshness check has not taken place sufficiently recently.

Hence, various embodiments also provide a method which determines whether an external data source freshness check should be made. This cuts down on the amount of freshness checking which is used and lowers stress on the DIS system.

In an embodiment of a further aspect of the invention there is provided a data integration system, DIS, including: a data aggregation section linked to external sources and configured to integrate data from the external sources and to store the integrated data in a data store; and a registry configured to store metadata of the external data sources for the data in the data store; wherein the DIS is configured to be triggered to carry out a freshness check of user queried data; and the data aggregation section is configured to provide current metadata from the external sources for the queried data; wherein the registry is configured to compare the stored metadata for the queried data with the current metadata; and wherein if the stored metadata matches the current metadata, the DIS allows the query to use the data in the data store and if the stored metadata does not match the current metadata, the data aggregation section is configured to refresh data in the data store from the external source before use in the query.

This aspect relates to the system itself and the components which make it up.

The DIS includes a data aggregation section for data integration, and a registry (referred to as a processing instruction registry in some invention embodiments) which stores metadata and compares the stored metadata with current metadata from the source. If there is a match between the stored metadata and that from the source, the DIS allows the query to proceed at the data store, whereas if the stored metadata does not match the current metadata, the data aggregation section will re-integrate data in the data store from the external source which the query relates to, before the query progresses. Hence the query can only progress with up-to-date data.

Although the current metadata may be supplied for comparison by any suitable method, preferably the data aggregation section is configured to regenerate metadata for the queried data to provide the current metadata; and to overwrite the metadata already stored in the registry if there is a difference or otherwise do nothing. Thus as explained above, the data aggregation section may carry out the extraction and provision of metadata at this stage without the integration of the data itself, simply for a freshness check of the metadata.

In some embodiments, the external source identification is not available from the query. In this case the DIS can use any suitable mapping method to map the data requested in the query onto the appropriate external source from which the data was originally integrated. Preferably, the registry is configured to use an ontology mapping table and a mash-up mapping table to find an external source ID. The ontology mapping table can be used to convert from a query command with, for example, an RDF triple pattern into the data that is being searched. The mash-up mapping table can be used to look from the data to its external source.

The registry and aggregation section can work together in any way to carry out the process. Following comparison of the current metadata and stored metadata, it may be necessary to retrieve data or not. In one embodiment, the registry is configured to issue a retrieve command to the data aggregation section if the regenerated metadata does not match the stored metadata and to send an execution command to the data store once the retrieved data is stored; and the registry is configured to send the execution command without further action if the regenerated metadata does match the stored metadata.

The invention also relates to the data store linked to the DIS. As mentioned previously, the data store is likely to be provided separately from the DIS, but may in some circumstances be part of the DIS. Hence the features of the data store set out hereinafter may be features of the DIS and vice versa.

In an embodiment of a still further aspect of the present invention there is provided a data store linked to a data integration system, DIS, which is configured to integrate data from external sources and store the integrated data in the data store, the data store comprising: one or more stores for data; an input (probably an I/O means for use by an application) allowing a query to be sent to the data store; and a query checker triggered by the query, which is configured to cause a freshness check command to be sent to the DIS to compare stored metadata for the queried data in the DIS with current metadata for the queried data in the external sources and to wait for a response from the DIS before passing the query to the data store.

In addition to (or included with) the registry provided in the DIS there may be a query registry in the data store. This component may be used to determine whether an external data source needs to be freshness checked. The query registry stores previous queries. Preferably, the query checker is configured to compare the query with previous queries (stored in the query register) and only to trigger a freshness check command if a query directed to the same queried data has not been made within a certain time span.

The query checker can use any suitable functionality for analysing the queries. In one preferred embodiment the query checker is configured to parse the query and to forward query (triple) patterns for checking to the DIS.

Preferably, the query checker is configured to subsequently receive an execution command from the DIS and only then to forward the released query to the data store for execution.

Finally, an embodiment of a software aspect relates to software which when executed in a data store and/or a data integration system, DIS, carries out a method according to any of the preceding method claims or any combination of method claims. Furthermore, invention embodiments may include a suite of computer programs installed on a data store and/or a DIS which when executed carry out a method as set out hereinbefore.

The invention refers to various components which carry out functions in the DIS and/or in the data store, such as the data aggregation section, registry, query register, query checker, input etc. Each of these functional components may be realised by hardware configured specifically for carrying out the functionality of the module. The functional modules may also be realised by instructions or executable program code which, when executed by a computer processing unit, causes the computer processing unit to perform the functionality attributed to the functional module. The computer processing unit may operate in collaboration with one or more of memory, storage, I/O devices, network interfaces (either via an operating system or otherwise) and other components of a computing device in order to realise the functionality.

Although the components are defined separately, they may be provided by the same computer hardware. Equally the functionality of a single component may be provided by a plurality of different computing resources.

Although the aspects in terms of methods, DIS and data store have been discussed separately, it should be understood that features and consequences thereof discussed in relation to one aspect are equally applicable to the other aspects. Therefore for example where a method feature is discussed, it is taken for granted that the apparatus embodiments include a unit or apparatus configured to perform that feature or provide appropriate functionality, and that programs are configured to cause a computing apparatus on which they are being executed to perform said method features.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-
Figure 1 is a flowchart illustrating a general embodiment of the invention;
Figure 2 is a schematic diagram of component architecture according to one embodiment of the invention;
Figure 3 is an example of an ontology definition;
Figure 4 is an example of an SPARQL query;
Figure 5 is an example of an SPARQL query with conditions;
Figure 6 is an example of possible system architecture;
Figure 7 shows an example of overall processing;
Figure 8 is a flowchart depicting some of the procedural steps in Figure 7; and
Figure 9 is a flowchart illustrating checking of a CSV file.

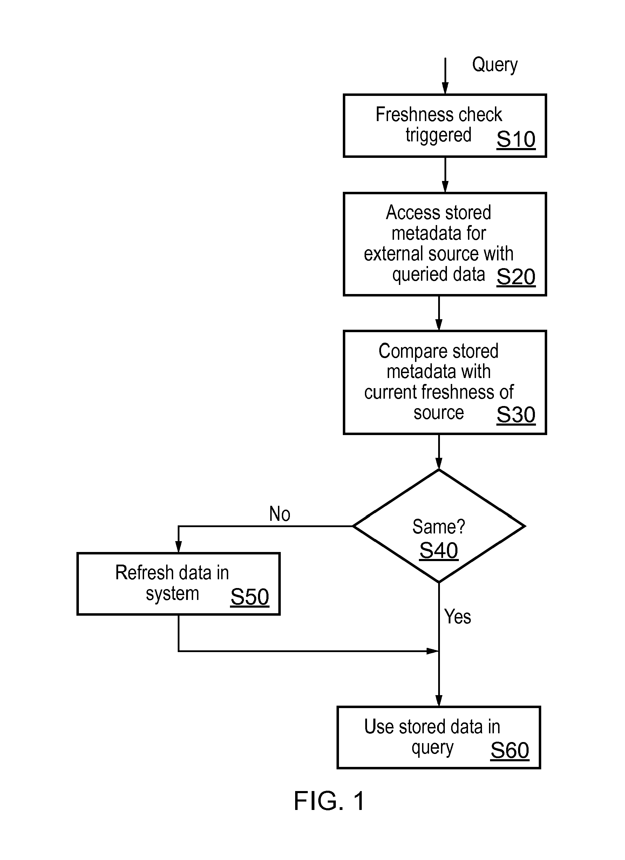

Figure 1 is a flow diagram of a general embodiment of the invention according to the first aspect. It shows the process in a Data Integration System which stores data which is integrated/aggregated from external sources (that is sources which are not part of the DIS or its associated data store).

In step S10 a freshness check is triggered for queried data. The query could possibly come from a user directly to the DIS, but it is most likely to be sent to a data store which is associated with the DIS. In this more normal case, the data store can trigger the freshness check.

In step S20, in a first process for the freshness check, stored metadata for the external source with queried data are accessed. In step S30, this stored data is compared with current metadata at the source for the queried data. For example, the DIS may regenerate the metadata from the external data source or it may be accessed in some other way. In step S40 the stored metadata is compared with the current metadata to see if they are the same. A change in metadata indicates that the data previously integrated from the external source is not the same as the data now available from the external source and thus that the data in the data store relating to the query is not fresh. Thus the data in the DIS is refreshed in step S50. Effectively this is a data integration step. Once the data has been refreshed in step S50, the stored data can be used in the query in step S60. In the case that the metadata which was stored in the DIS is the same as the current metadata at the source, the answer to the question in step S40 is that "yes" they are the same and there is no need to refresh the data, so the next step is to use the stored data in the query without any necessity to update it.

The invention embodiments are applicable to any type of DIS system. However, since the resource description framework, RDF data structure (and its triple store) are well known as the best solutions for solving Big Data integration issues, due to its flexibility and scalability, a RDF store is preferred with the DIS system for explanation purpose.

The RDF data structure, and other suitable data structures are used in relational databases. Relational databases store data in rows and columns. The rows and columns compose tables that need to be defined before storing the data. The definition of the tables and the relationship between data contained on these tables is called a schema. A relational database uses a fixed schema. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

There are several types of graph representations. Graph data may be stored in memory as multidimensional arrays, or as symbols linked to other symbols. Another form of graph representation is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

Optionally, triples mentioned herein may be Resource Description Framework (RDF) triples. Throughout this document, it should be understood that where specific references to "RDF triple(s)" are made, it is an exemplary form of triple, conforming to the RDF standard. Furthermore, references to "triple(s)" include the possibility that the triple in question is an RDF triple.

The Resource Description Framework is a general method for conceptual description or modelling of information that is a standard for semantic networks. Standardising the modelling of information in a semantic network allows for interoperability between applications operating on a common semantic network. RDF maintains a vocabulary with unambiguous formal semantics, by providing the RDF Schema (RDFS) as a language for describing vocabularies in RDF.

The triples provide for encoding of graph data by characterising the graph data as a plurality of subject-predicate-object expressions. In that context, the subject and object are graph nodes of the graph data, and as such are entities, objects, instances, or concepts, and the predicate is a representation of a relationship between the subject and the object. In other words, a collection of triple statements intrinsically represents directional graph data. The RDF standard provides formalised structure for such triples.

In many scenarios, each of one or more of the elements of the triple (an element being the predicate, the object, or the subject) is a Uniform Resource Identifier (URI) (or Uniform Resource Locator (URL)). RDF and other triple formats are premised on the notion of identifying things (i.e. objects, resources or instances) using Web identifiers such as URIs and describing those identified 'things' in terms of simple properties and property values. In terms of the triple, the subject may be a URI identifying a web resource describing an entity, the predicate may be a URI identifying a type of property (for example, colour), and the object may be a URI specifying the particular instance of that type of property that is attributed to the entity in question, in its web resource incarnation. The use of URIs enables triples to represent simple statements, concerning resources, as a graph of nodes and arcs representing the resources, as well as their respective properties and values. The triples (and other suitable formats) can be queried using a query language. An RDF graph can, for example, be queried using the SPARQL Protocol and RDF Query Language (SPARQL). It was standardized by the RDF Data Access Working Group (DAWG) of the World Wide Web Consortium, and is considered a key semantic web technology. SPARQL allows for a query to consist of triple patterns, conjunctions, disjunctions, and optional patterns.

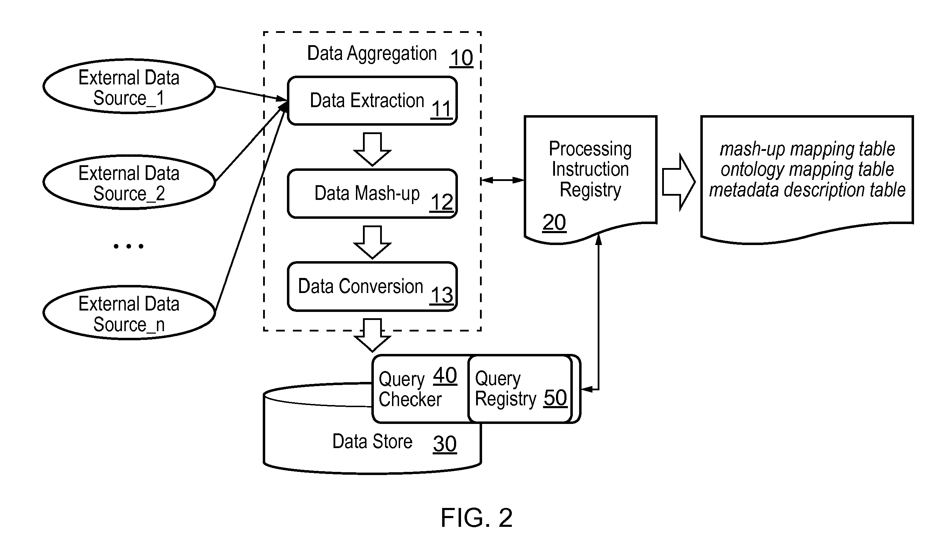

Figure 2 shows a suitable component architecture for carrying out the methods of the present invention. The components shown are a data aggregation section 10, a processing instruction registry 20, which houses various tables described later in more detail, a data store 30, a query checker 40 and a query registry 50. The diagram also includes three external data sources linked to the data extraction part of the data aggregation section.

The data aggregation section includes three different components, a data extraction component 11, a data mash-up component 12 and a data conversion component 13. Of course different arrangements may be provided which do not include the specific components, which are exemplary in nature. Furthermore, the query checker and query registry are shown as associated with the data store and linked to the processing instruction registry, but the locations of all these components are exemplary only.

The exemplary system shown functions to retrieve data on-demand at a system run time as necessary and when triggered by a freshness check. The key components in this embodiment to carry out the freshness check are the processing instruction registry and the query checker. The processing instruction registry is a functional component which stores metadata for processing and carries out some checking. The query checker is a component which has a checking functionality and can also store previously executed queries/triple patterns within the query registry which is a part of the query checker. In the arrangement shown, the query checker is a light-weight plugin program, which can be installed on the data store. The processing instruction registry can, on the other hand, be a very complicated module that is part of the DIS.

To clarify the sequence of the process, the tasks of all the components are described below:
The data aggregation section: extracts, integrates, and converts data from external data sources into a format for the DIS system.
   - In data extraction, data is extracted from external data sources according to the mash-up mapping table, and produces metadata description as a byproduct, which is then written to the metadata description table by the processing instruction registry. The tables are described in more detail later, but are essentially for putting the data into the correct format according to DIS requirements and producing metadata. Any suitable functionality may be used.
   - Data mash-up integrates data from different sources into one single view based on the mash-up mapping table.
   - Data conversion converts each internal single view (such as CSV files) into RDF, and store them in RDF store.

The processing instruction registry stores the mash-up mapping table, ontology mapping table, and metadata description table. When it receives a check command from the query checker, the processing instruction registry retrieves the external data source ID ***EDSᵢ*** from the mash-up mapping table and ontology mapping table, it then requires data extraction to regenerate the metadata description (***MD**_{i_new}*) of the ***EDS_{i,},*** and compares *MD_{i_new}* with *MD_{i_0}* to decide whether data from ***EDSᵢ*** needs to be refreshed.

The query checker intercepts and parses incoming queries, such as SPARQL queries, to decide whether to release the query to the storage for execution, or to send a check command to the processing instruction registry to check data freshness.

In Figure 2, the processing flow between data extraction, mash-up, and conversion are shown as sequential, but physically the data extraction and data mash-up may take place in parallel within one step. Thus the performance can be optimised when the data amounts increase.

### Processing Instruction Registry

The processing instruction registry contains the mash-up mapping table, ontology mapping table, and metadata description table. The mash-up mapping table is predefined by users of the DIS system, through a simple GUI-filed application, this is to instruct the system how to mix and match data from heterogeneous sources into one single view. Information contained in a mash-up mapping table may include data source location in URL format, the type of the data to be extracted, e.g., a RDBMS or Excel file, together with the column names from that table or Excel file to be extracted. The Processing instruction registry also stores the ontology mapping table that is derived from a mash-up mapping table. When the Query Checker issues a check command to the processing instruction registry, the ontology mapping table will be looked up first to find the corresponding mash-up mapping table, hence the external data source ID ***EDSᵢ.***

### Metadata Description (MDᵢ) Table

The metadata description table is a string of technical information about an electronic file. Typically information about the file includes when it was created, who created it, when it was last modified, file size and file extension. These details of the data for storage in the DIS are extracted from each external data sources ***EDS*_{*i.*.}** Three types can be identified for the external data sources EDS:
- Type1: file system file, which includes document, program file, etc.
- Type2: relational database systems.
- Type3: html webpages.

For Type1 ***EDS*,** metadata can be easily retrieved from file system, for example: size, date modified, last opened, for most of the file system data files, e.g. Excel, CSV, Word. This metadata should be sufficient to form the core information of the files.

For Type2 ***EDS*,** tables, their names, sizes, and number of rows in each table can be extracted as metadata for change detection. If the size and row number are the same, an update log record may also be checked, to see if there is any modification to the existing data. This metadata information can be accessed programmatically by using Application Programming Interfaces APIs such as Java Database Connectivity JDBC.

For Type3 ***EDS*,** normally metadata can be found in a meta tag. However, not all the webpages provide date or size information, and furthermore, java scripts to retrieve dynamic information from the server are more common in web page design nowadays. In this case, we assume that data retrieved from the web through form queries with same query parameter, should always return the same data, e.g., historical stock prices for a particular company, therefore we consider the need for this to be refreshed is rare.

An example of such a metadata description table can be shown in Table 1:

**Table 1: Metadata Description Table**

| ***ID*** | ***Source URL*** | ***Type*** | ***Metadata Description*** | | | |
|---|---|---|---|---|---|---|
| | | | ***Size*** | ***Date modified*** | ***Last opened*** | ***Update log record*** |
| ***EDS₁*** | File://mydatabase/ example | RDBMS | 2G | 10 Nov 2013 | N/A | 0000:00000587 |
| | | | | | | 2009/06/16 17:49:56:927 - 1 51 |
| ***E**DS₂* | File:///mypath/myd ocument | Excel | 100MB | 17 Dec 2013 | 17 Dec 2013 | N/A |
| ***EDS₃*** | http://dbpedia.org | Web data | | 18 Dec 2013 | N/A | N/A |
| ... | | ... | ... | | | |
| ***EDSᵢ*** | | CSV | 46MB | 23 Dec 2013 | 24 Dec 2013 | N/A |

### Mash-up Mapping Table

The purpose of the mash-up mapping table is to let the system know what information from which external data source need to be extracted, and how the user wishes to mix these heterogeneous information together into the DIS system. This allows the system to create a single view of the data that user wishes to see but which physically resides at different locations. It can also been seen as type of virtual mediated schema in the traditional federated database system sense that the information is from the original sources, with the difference being external data sources are not necessarily database systems. An example of this kind of mash-up information can be shown in Table 2:

**Table 2: Mash-up Mapping Table**

| ***Names*** | ***Source URL*** | ***Data Pattern*** | ***Source ID*** | ***Type*** |
|---|---|---|---|---|
| Company_Names | file://mypath/company_name.data | String | ***EDS₂*** | Document |
| Total_Number_Employees | http://dbpedia.org | String | ***EDS₁*** | CSV |
| Industry_Sector | http://www.sec.gov/ | Integer | ***EDS₃*** | Web data |
| ... | ... | ... | | ... |

This table can, for example, be composed by a standalone application by users using a GUI application.

After being processed by the data extraction and data mash-up components, the content of the above table can be converted into a temporary data format, for example a (Comma-Separated Value) CSV file. This is not the only suitable format, but is a good candidate because of its simplicity. In the case of a CSV file, the ***Names*** field in the mash-up mapping table become column names in the CSV file, with the first name, e.g. ***Company_Names*** becomes the primary key of the CSV file. The rest of the fields, e.g., ***Source URL, Data Pattern, Type*** fields are necessary information for the DIS system to decide where and how to retrieve data from external data sources. An example of such a CSV file can be seen in Table 3:

**Table 3: CSV version predicate of Mash-up Mapping File**

| ***Company_Names*** | ***Total_Number_Employees*** | ***Industry_Sector*** | ... |
|---|---|---|---|
| Google Inc. | 53861 | 7370 | |
| Apple. | 72800 | 7370 | |
| | | | ... |
| ... | | | |

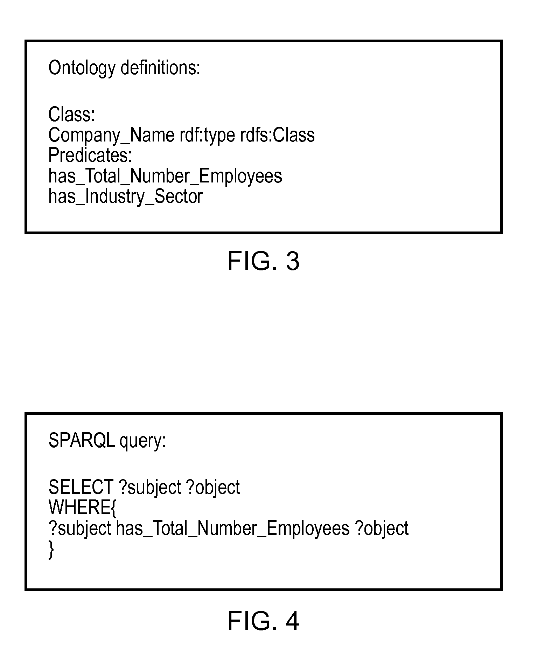

From the mash-up mapping table, an ontology mapping table can be derived based on the ***Names*** information. A simple method of creating this ontology is to adopt the language R2RML; this is a RDB (relational database) to RDF Mapping Language defined by w3c: http://www.w3.org/TR/r2rml/. The basic idea is to convert the first row in the Names field, e.g. the primary key column of the CSV file into subjects, and the rest of the Names or columns in the CSV file become predicates, and the values of each cell becomes objects. An example of the ontology can be seen in Figure 3:

A triple statement example created based on the ontology in figure 3 looks like this:
***http:*//*example*/*Company NamelGoogle Inc.has_Total Number_Employess 53861***

The converted RDF triple statements will then be written into the RDF store.

### Processes in the Processing Instruction Registry

The processing instruction registry of this embodiment carries out two main processes - external data source ID retrieval and metadata change detection, in order to determine which data source **(*EDS*)** need to be checked, and whether a refresh is needed on this data source.

### • External Data Source ID Retrieval

After the query checker decides to issue a check command to the Processing instruction registry, it also forwards the triple patterns that need to be checked. For example, in the SPARQL query of figure 4, a triple pattern of ***?subject has_Total_Number_Employees ?object*** is forwarded to the processing instruction registry. By looking up the ontology mapping table as shown in Figure 3, it is easy to find out that the triple pattern is looking for predicate ***has*_*Total*_*Number*_*Employess*.** Examining Tables 2 and 3, a further conclusion can be drawn that the query requests all the values that are from ***E**DS₂* as ***?subject*** and ***EDS₁*** as ***?object.*** Furthermore, the values of ***EDS₁*** should be retrieved according to the values of ***EDS₂,*** since it is the primary key. Once this information is derived, the metadata change detection will be carried out as described in the following section.

### • Metadata Change Detection

The initial metadata description table ***MD_{i_0}*** can be generated in parallel with the data extraction process and written to the processing instruction registry as a by-product. After the external data source ID **(*EDSᵢ*)** is retrieved in the above external data source ID retrieval process, the processing instruction registry will issue a metadata description generation command again to the data extraction component at query runtime. It will then compare the latest source metadata ***MD_{i_new}*** with the existing ***MD*_{*i_0*.}** If ***MD_{i_new}*** *=* ***MD_{i_0}*,** the processing instruction registry will send a release query command to the storage. In the case of ***MD_{i_new}* ≠** ***MD**_{i_0},* the retrieve command will be issued to the data extraction process to refresh data from ***EDSᵢ*** in the DIS system, and the processing instruction registry will overwrite ***MD**_{i_0}* with ***MD**_{i_new}*.

The metadata description consists of a few important fields which can be used for detecting changes in the external data sources. These fields are listed in Table 1, and may be arranged according to the importance, or for example the most obvious and clear indication of the changes in the external data sources. The type of metadata needing to be checked will be decided by the type of external data source, e.g., if it is RDBMS (Relational Database Management System), only size, date modified, and updated log record need to be checked, and in the case of Excel or CSV files, the size, date modified, and last opened could be checked.

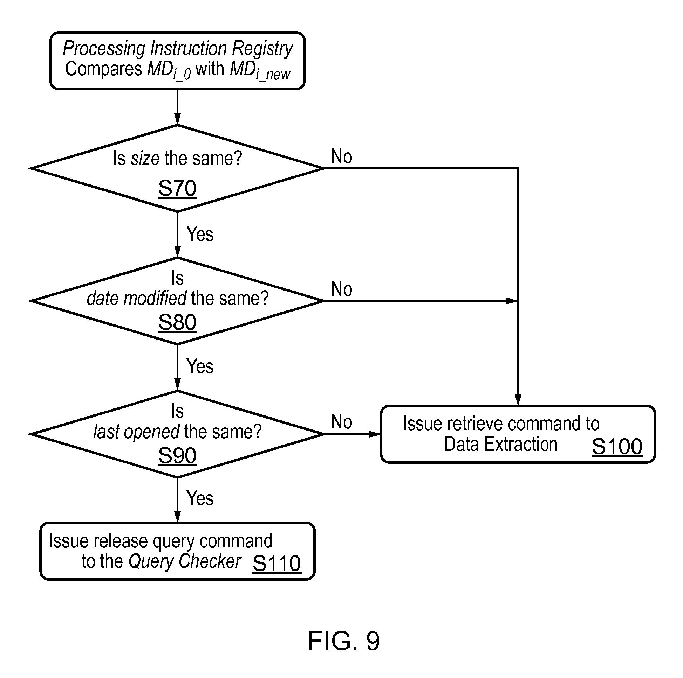

An example of the checking flow for the CSV file can be found in Figure 9.

Firstly, the size of the metadata is checked in step S70, and if it is not the same for the existing and latest metadata, data is refreshed in step S100. Otherwise, the date modified is checked in step S80, and if it is not the same, data is retrieved in step S100. Otherwise, the last opened date is checked in step S90, and if it is not the same, data is retrieved in step S100. Otherwise the release query command is issued to the query checker in step S110. Incidentally, the process can continue with the release query command after data retrieval in step S110.

### Query Checker

In some invention embodiments, this component can be a small plugin program installed inside any RDF stores to intercept incoming SPARQL queries. It can also contain a Query Registry that records the triple patterns in the queries that have been issued to the storage. When a query is sent to the RDF store, the query checker first breaks the query down to a few triple patterns, it then checks with the query registry to see if the same triple patterns have been issued to the same store within a certain time span. If all the same triple patterns were found within the time span, the query checker directly forwards the query to the storage for execution. Otherwise, it sends a check command together with the triple patterns to the processing instruction registry to search the external data source ID. The recent usage function gives users more freedom to control how fresh they want the data to be. It also reduces unnecessary performance overhead.

If the checking result comes back with no changes in the external data sources, the query is released to the RDF Store for execution. Otherwise data that originated from the changed external data sources is freshly fetched first by the data extraction component. When the data conversion component finishes writing data to the storage, it sends a finished signal to the processing registry, which then asks the query checker to release the query to the RDF store.

In a more sophisticated embodiment, potentially in which the same triple patterns may be sent frequently and regularly, there could be a (longer) back up time span which requires another freshness check even if the query has been executed recently. The back up longer time span could always trigger a freshness check in the case of repeated queries or for example the method could take into account the first time that the query was executed and lead to a freshness check if the query was first executed more than the longer time span before the current time.

### Performance Considerations

Although one possible objective of invention embodiments is to guarantee that result-sets of queries to DIS systems contain data that is as fresh as possible, the performance of the data freshness algorithm is also a very important factor to measure the success of such methods. After carefully examining the whole process, some performance related conclusions are drawn as follows:

The query parsing and external data source ID retrieval part of the process only requires text matching, so the overall processing time is not likely to cause performance overhead.

Metadata retrieval and change detection does not involve a full external data source scan, and comparison itself can even be executed by just comparing a few parameters in Table 1 with optimised flow as shown in Figure 9. This process is thus also unlikely to cause performance overhead.

The core idea in retrieving data on-demand is to retrieve data that is absolutely relevant to the query. E.g., in the above example, only data from ***EDS₂*** and ***EDS₁*** are refreshed. This lowers the performance overhead.

In some embodiments, queries which might lead to refreshing a large amount of data may not trigger a freshness check. Instead, the query may be rejected, or carried out without a freshness check and the user potentially notified.

For example, checking the size of the RDF store and location of the external sources may only apply to a full query, e.g. a query that asks for all the information from the DIS store. An example of such kind of query could be:
SELECT ?subject ?predicate ?object WHERE { ?subject ?predicate ?object.}

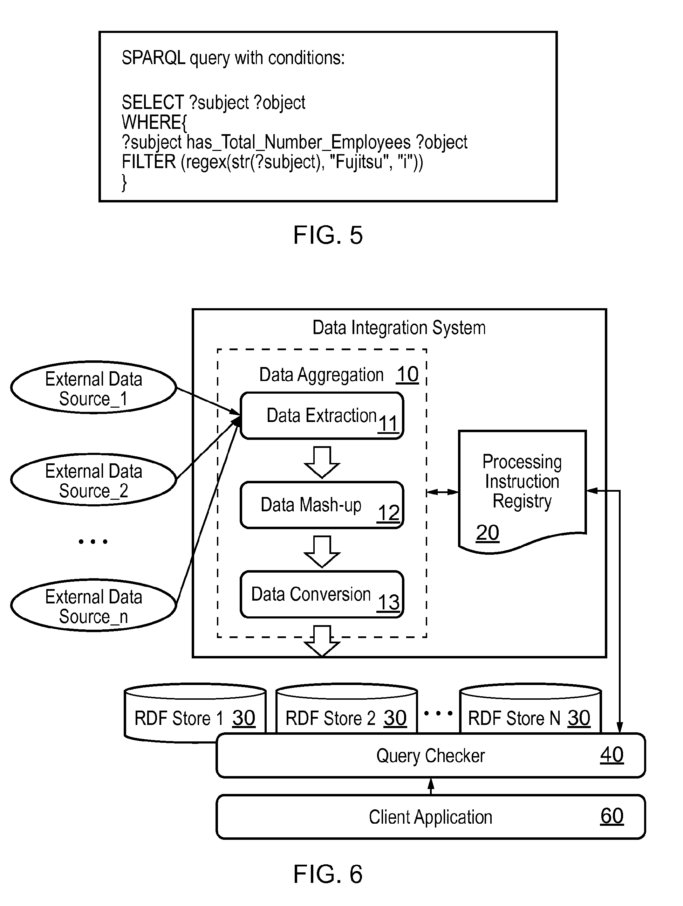

In a case where a full ***"?subject ?predicate ?object"*** type of query such as the above query is issued, the system might check the sizes and/or the locations of all the external sources. If the sizes are relatively small and locations are relatively local (for example no internet or network access is needed), then a full store data dump might be executed before releasing the query, if the data is not fresh. Otherwise, the system might execute the query based on existing data, and send a message to the query issuer suggesting that in order to obtain results with fresh data, the queries should be designed to bound with certain values, as shown in Figure 5, which includes a filter. For a more sophisticated mechanism there may be a primary and a secondary condition. The primary condition to check could be the location of the external data. If everything can be retrieved from a local disc, for example, or from another machine that is within the same network, then that means the data retrieval action will not take a long time, and a freshness check is potentially allowable. If the data is extracted from an online source - through a web query to a remote website, then retrieval may not be practical. Based on the primary condition, the secondary condition can be applied to see if the data size within a DIS store is small - for example, less than 10,000 statements, then retrieval can take place and a freshness check is thus allowable.

Some performance overhead will be caused by retrieving data on-demand, since retrieving and converting data take times, Thus there is a trade-off in obtaining fresh data in any DIS system. However, the overall solution and individual processing steps in invention embodiments are all designed to minimize the time/processing required, in an effort to reduce the overhead as much as possible. Therefore, compared to the traditional data freshness techniques, this approach is still much quicker.

### Architecture

The architecture of the whole system in one embodiment is illustrated by Figure 6:
A description of the parts already discussed above is omitted for brevity. The architecture shown differs from the component architecture in figure 2 primarily in that the data store is embodied as RDF stores 1 to N and in that the query registry and the specific tables stored in the processing instruction registry in the figure 2 embodiment are not included. The query check can be distributed or centralised depending on user preferred configuration. It intercepts queries sent from client application 60 to the RDF store.

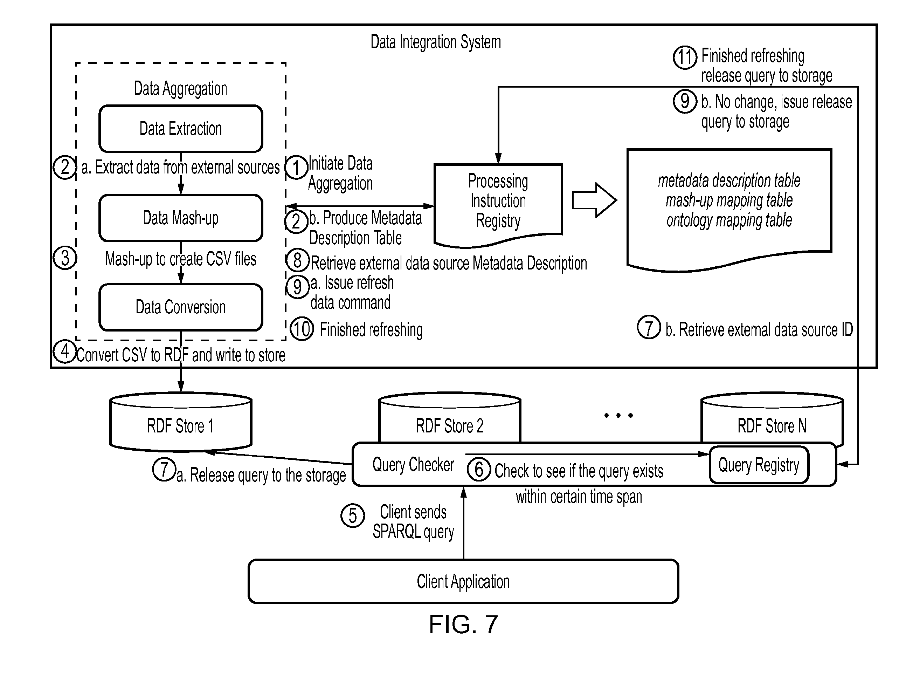

Figure 7 is an illustration of various steps of an on-demand data retrieval process mapped onto the relevant components of an architecture including the RDF stores, query registry and specific tables in the processing instruction registry. The client application is not necessarily aware of the processing in the data store and DIS (the server side processing).

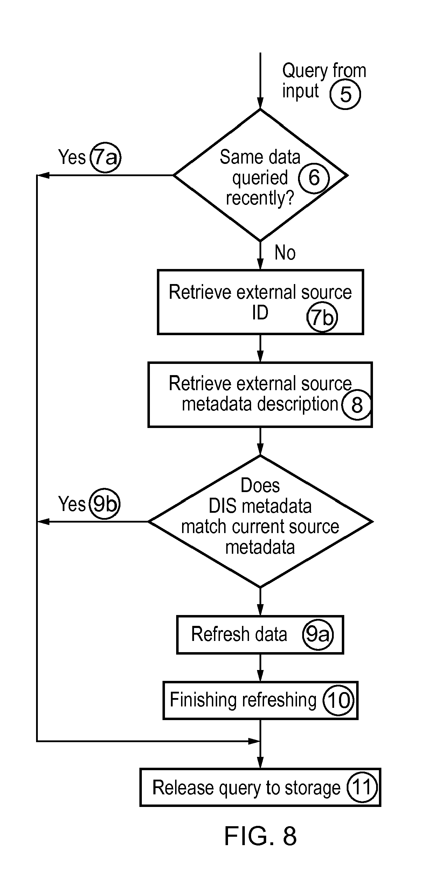

The labelled steps in Figure 7 encompass both the original data integration and the on-demand data retrieval. In step 1 data aggregation is initiated in the data aggregation section and in parallel steps 2a and 2b data is extracted from external sources and a metadata description table is produced respectively. In step 3 there is the mash-up to create CSV files. In step 4 the CSV files are converted to RDF and written to the data store. Steps 5 onwards are related to the freshness check with its on-demand data retrieval and are set out in figure 8 as well as figure 7 for easy reference. In step 5 the client application sends an SPARQL or other query and in step 6 there is a check to see if the same data has been queried recently. If it has in 7a the query is released to the storage for execution. If the same data has not been queried recently, in step 7b the external source ID is retrieved. This allows the stored metadata to be retrieved in step 8 and compared with the current metadata.

If there is no difference between the two, in step 9b the query is released to storage. If the DIS metadata does not match the current metadata, data is refreshed in step 9a. Once it has finished refreshing in step 10, the query is released to storage in step 11.

Hence the purpose of the query checker is to hold off query execution. In step 7a, there was no need to refresh the RDF store, therefore the query can be executed immediately by the RDF store. In the case of step 7b, the query checker issues a command to the processing instruction registry leading to the comparison in step 8. If there is no change to the metadata, step 9b is triggered to let the query checker know to continue with the query execution. Otherwise step 9a is triggered to refresh the store in step 10 and finishes refreshing, which in step 11 will trigger the query checker to execute the query.

The invention embodiments are applicable to any Data Integration System, and particularly appropriate when a single view schema (and ontology mapping table if the underlying storage is an RDF store) is derived from a mash-up mapping table. One major benefit of using invention embodiments can be that data retrieval is triggered by query on-demand for only the data that is relevant to the query, and that is detected as changed, thus guaranteeing data freshness and minimizing data fetching performance overhead.

Various embodiments can achieve the following:
- Data freshness checks are triggered on-demand by each individual query, which limits the scope of checks on external data sources.
- Not all the data that is potentially related to the result sets of a query need to be re-fetched - only the data that has been detected as changed. This greatly reduces the data fetching performance overhead.
- When there is no change detected from the original external data sources, data that is already stored inside the RDF store can be directly used for query execution without any other process.

Hence invention embodiments can provide:
- A method to refresh full/partial data that is absolutely relevant to the query at runtime.
- A method to retrieve external data source IDs that need to be checked.
- A method to detect changes in the external data sources.
- A method to cache and compare triple patterns.
- A data integration system that is capable of parsing query triple patterns, detecting metadata changes from external data sources, so that only data that is absolutely relevant to the query and has been changed is re-fetched, thus guaranteeing query result set freshness and reducing data fetching overhead.

Currently, well-known technologies to handle the DIS system data freshness issue are limited and not capable of adapting to the high volume and velocity nature of Big Data. For example, materialization techniques only refresh all the external data periodically, so data freshness is clearly not guaranteed if external data sources are constantly updated. Virtual techniques extract data every time when there is a query issued to the system, this ensures the freshness of the data, but the query response time can be very slow. Caching techniques seems to be the most promising method to ensure both query performance and data freshness, since they cache data that is frequently accessed or the result of frequent queries. However, if examined closely, it is not difficult to detect that the cached data are after out-of-date even before they are invalidated when the time-to-live (TTL) has expired.

Invention embodiments propose a new method to tackle the data freshness problem in DIS systems. The process can be triggered by a query issued to the system, followed by query parsing to decide which external data sources need to be examined, and finally, detection of changes in the external data sources. If changes are found, the system of invention embodiments can re-fetch data from the external data sources and update the DIS system, otherwise, the data already existing inside the system can, for example, be returned as query execution results. This approach not only guarantees the freshness of the data, but also reduces unnecessary data retrieval and updates at runtime. Extra time may be needed for checking the differences in external data sources, however, by employing a lightweight metadata comparison algorithm, and partially retrieving relevant data, the difference in the overall query execution time for data freshness checking can become unnoticeable.

## Claims

1. A method of checking freshness of data for a data integration system, DIS, storing data integrated from external sources in a data store wherein:
a freshness check is carried out on queried data integrated from external sources, the freshness check accessing stored metadata in the DIS and comparing the stored metadata for the queried data with current metadata of the external sources for the queried data; and wherein
if the stored metadata matches the current metadata, the DIS allows the query to use the data in the data store and if the stored metadata does not match the current metadata, the data in the data store is refreshed from the external source before use in the query.

2. A method according to claim 1, wherein the freshness check regenerates the metadata from the external data source to provide current metadata and compares the regenerated metadata with the stored metadata to determine whether the queried data needs to be refreshed.

3. A method according to claim 1 or 2, wherein only data relevant to the query is refreshed from the external source.

4. A method according to any of the preceding claims, wherein the query triggers a freshness check of queried data for any of two or more external sources, and the check is carried out separately for each external source.

5. A method according to any of the preceding claims, further including a data integration process for data storage before the query is sent to the DIS, and/or for refreshing data in the data store, the data integration process including
extracting data from external sources, and in parallel providing metadata, which is then stored in a registry in the DIS;
integrating the data into a single view using a user-defined mapping; and
preferably converting the data from a temporary data format into a resource description framework, RDF format using an ontology mapping and storing the data in an RDF store.

6. A method in a data store linked to a data integration system, DIS, which is configured to integrate data from external sources and store the integrated data in the data store, the method comprising:
accepting a user input in the form of a query about data in the data store;
sending a freshness check command to the DIS to compare stored metadata for the queried data in the DIS with current metadata for the queried data in the external sources;
waiting for a response from the DIS before passing the query for execution.

7. A method according to claim 6, wherein the freshness check command is not sent if the breadth of the query and/or size of the external data source queried and/or location of the external data source queried would lead to an unacceptably large data transfer, and preferably wherein the freshness check command is not sent due to the threshold, a user is recommended to bound the query further.

8. A method according to claim 6 or 7, wherein the freshness check command is only sent if a query directed to the same queried data has not been made within a certain time span.

9. A data integration system, DIS, including:
a data aggregation section linked to external sources and configured to integrate data from the external sources and to store the integrated data in a data store; and
a registry configured to store metadata of the external data sources for the data in the data store;
wherein
the DIS is configured to be triggered to carry out a freshness check of user queried data;
the data aggregation section is configured to provide current metadata from the external source for the queried data; wherein;
the registry is configured to compare the stored metadata for the queried data with the current metadata; and wherein
if the stored metadata matches the current metadata, the DIS allows the query to use the data in the data store and if the stored metadata does not match the current metadata, the data aggregation section is configured to refresh data in the data store from the external source before use in the query.

10. A DIS according to claim 9, wherein
the data aggregation section is configured to regenerate metadata for the queried data to provide the current metadata; and to provide the regenerated metadata to the registry.

11. A DIS according to claim 9 or 10, wherein the registry is configured to use an ontology mapping table and a mash-up mapping table to find an external source ID.

12. A DIS according to claim 11, wherein
the registry is configured to use the external source ID to request regenerated metadata from the data aggregation section, and to overwrite the metadata with the regenerated metadata if the regenerated metadata does not match the metadata.

13. A DIS according to any of the preceding DIS claims, wherein
the registry is configured to issue a retrieve command to the data aggregation section if the regenerated metadata does not match the metadata and to send an execution command to the data store once the retrieved data is stored; and
the registry is configured to send the execution command without further action if the regenerated metadata does match the metadata.

14. A data store linked to a data integration system, DIS, which is configured to integrate data from external sources and store the integrated data in the data store, the data store comprising:
one or more stores for data;
an input allowing a query to be sent to the data store; and
a query checker triggered by the query, which is configured to cause a freshness check command to be sent to the DIS to compare stored metadata for the queried data in the DIS with current metadata for the queried data in the external sources and to wait for a response from the DIS before passing the query to the data store.

15. A data store according to claim 14, further comprising:
a query registry storing previous queries, wherein the query checker is configured to compare the query with previous queries and only to trigger a freshness check command if a query directed to the same queried data has not been made within a certain time span.

16. A data store according to claim 14 or 15, wherein
the query checker is configured to parse the query and to forward query patterns for checking to the DIS.

17. A data store according to any of claims 14 to 16, wherein
the query checker is configured to receive an execution command from the DIS and only then to release the query to the data store for execution.

18. Software which when executed in a data store and/or a data integration system, DIS, carries out a method according to any of the preceding method claims.

## Amended claims

### Amended claims in accordance with Rule 137(2) EPC.

1. A method of checking freshness of data for a data integration system, DIS, storing data integrated from external sources in a data store (30) wherein:
a freshness check is carried out on queried data in a query, the queried data having been integrated from external sources, the freshness check accessing (S20) stored metadata in the DIS and comparing (S30) the stored metadata for the queried data with current metadata of the external sources for the queried data; and wherein
if the stored metadata matches the current metadata, the DIS allows the query to use (S60) the data in the data store and if the stored metadata does not match the current metadata, the data in the data store is refreshed (S50) from the external source before use in the query.

2. A method according to claim 1, wherein the freshness check accesses the metadata of the external data source to provide current metadata and compares the regenerated metadata with the stored metadata to determine whether the queried data needs to be refreshed.

3. A method according to claim 1 or 2, wherein only data relevant to the query is refreshed from the external source.

4. A method according to any of the preceding claims, wherein the query triggers (S10) a freshness check of queried data for any of two or more external sources, and the check is carried out separately for each external source.

5. A method according to any of the preceding claims, further including a data integration process for data storage before the query is sent to the DIS, and/or for refreshing data in the data store, the data integration process including
extracting data from external sources, and in parallel providing metadata, which is then stored in a registry in the DIS;
integrating the data into a single view using a user-defined mapping; and
preferably converting the data from a temporary data format into a resource description framework, RDF format using an ontology mapping and storing the data in an RDF store.

6. A method in a data store (30) linked to a data integration system, DIS, which is configured to integrate data from external sources and store the integrated data in the data store, the method comprising:
accepting a user input in the form of a query about data in the data store;
sending a freshness check command to the DIS to compare stored metadata for the queried data in the DIS with current metadata for the queried data in the external sources in accordance with any of claims 1 to 5;
waiting for a response from the DIS before passing the query for execution,
wherein
if the stored metadata matches the current metadata, the DIS allows the query to use (S60) the data in the data store and if the stored metadata does not match the current metadata, the data in the data store is refreshed (S50) from the external source before use in the query.

7. A method according to claim 6, wherein the freshness check command is not sent if the breadth of the query and/or size of the external data source queried and/or location of the external data source queried would lead to data transfer larger than a threshold, and preferably wherein the freshness check command is not sent due to the threshold, a user is recommended to bound the query further.

8. A method according to claim 6 or 7, wherein the freshness check command is sent when a query directed to the same queried data has not been made within a certain time span.

9. A data integration system, DIS, including:
a data aggregation section (10) linked to external sources and configured to integrate data from the external sources and to store the integrated data in a data store (30); and
a registry (20) configured to store metadata of the external data sources for the data in the data store;
wherein
the DIS is configured to be triggered (S10) to carry out a freshness check of user queried data in a query;
the data aggregation section (10) is configured to provide current metadata from the external source for the queried data; wherein;
the registry (20) is configured to compare the stored metadata for the queried data with the current metadata; and wherein
if the stored metadata matches the current metadata, the DIS allows the query to use the data in the data store and if the stored metadata does not match the current metadata, the data aggregation section is configured to refresh data in the data store from the external source before use in the query.

10. A DIS according to claim 9, wherein
the data aggregation section (10) is configured to access metadata of the external data source for the queried data to provide the current metadata; and to provide the regenerated metadata to the registry.

11. A DIS according to claim 9 or 10, wherein the registry is configured to use an ontology mapping table and a mash-up mapping table to find an external source ID, wherein the ontology mapping table converts from a query command into the data that is being searched and the mash-up mapping table maps the data that is being searched to an external data source.

12. A DIS according to claim 11, wherein
the registry (20) is configured to use the external source ID to request regenerated metadata from the data aggregation section, and to overwrite the metadata with the regenerated metadata if the regenerated metadata does not match the metadata.

13. A DIS according to any of the preceding DIS claims, wherein
the registry (20) is configured to issue a retrieve command to the data aggregation section (10) if the regenerated metadata does not match the metadata and to send an execution command to the data store once the retrieved data is stored; and
the registry is configured to send the execution command without further action if the regenerated metadata does match the metadata.

14. A data store (30) linked to a data integration system, DIS, according to any of claims 9 to 13, which DIS is configured to integrate data from external sources and store the integrated data in the data store, the data store comprising:
one or more stores (30) for data;
an input allowing a query to be sent to the data store; and
a query checker (40) triggered by the query, which is configured to cause a freshness check command to be sent to the DIS to compare stored metadata for the queried data in the DIS with current metadata for the queried data in the external sources and to wait for a response from the DIS before passing the query to the data store, wherein
if the stored metadata matches the current metadata, the DIS allows the query to use (S60) the data in the data store and if the stored metadata does not match the current metadata, the data in the data store is refreshed (S50) from the external source before use in the query.

15. A data store according to claim 14, further comprising:
a query registry (50) storing previous queries, wherein the query checker is configured to compare the query with previous queries and to trigger a freshness check command when a query directed to the same queried data has not been made within a certain time span.

16. A data store according to claim 14 or 15, wherein
the query checker (40) is configured to parse the query and to forward triple patterns for checking to the DIS.

17. A data store according to any of claims 14 to 16, wherein
the query checker (40) is configured to receive an execution command from the DIS and only then to release the query to the data store for execution.

18. Software which when executed in a data store and/or a data integration system, DIS, carries out a method according to any of the preceding method claims.
